# EUROPEAN PATENT SPECIFICATION

(11) **EP 3 006 370 B1**
(45) Date of publication and mention of the grant of the patent: **04.07.2018**
(21) Application number: 15188822.9
(22) Date of filing: 07.10.2015
(51) Int. Cl.: B65D 77/20, B65D 81/28, B65D 85/34, B65D 65/46

(54) **SEALED FIBROUS CONTAINER**
VERSIEGELTER FASERBEHÄLTER
RÉCIPIENT FIBREUX ÉTANCHE

(30) Priority: 08.10.2014 GB 201417795
(43) Date of publication of application: 13.04.2016
(73) Proprietor: Evesham Specialist Packaging Limited, Toddington, Gloucestershire GL54 5EB (GB)
(72) Inventor: LYNCH, Ronan, Toddington, Gloucestershire GL54 5EB (GB)
(74) Representative: Johnston, Magnus George

(56) References cited:
- EP-A1- 2 206 658
- WO-A1-2008/035082
- IT-A1- MI20 101 463
- US-A- 3 615 707
- US-A1- 2011 101 077
- US-A1- 2012 055 981
- US-A1- 2012 312 716

## Description

### TECHNICAL FIELD

The present invention is directed to a container having an opening sealed with a polymeric film, the container being formed from a pulpable, fibrous material, and less than about 50 % of the surface area of the polymeric film being is contact with the container, to a method of making such a container, and to a method of packaging an article of commerce (e.g., fruit) in said container.

### BACKGROUND OF THE INVENTION

Plastic and polystyrene are the dominant forms of packaging worldwide. They are attractive products owing to flexibility and/or low cost and ease of transport. In the fresh produce market, an important aspect is delivering to the consumer products that are fresh and safe. Plastics and polystyrene are commonly used for packaging fresh produce, such as fruit and vegetables. However, plastics are less attractive from an environmental perspective because they can be expensive to recycle, and consumers may in any case not bother to recycle and plastics tend to have poor or negligible biodegradability, whereas polystyrene cannot be recycled at all. Thus, there is growing demand for biodegradable and recyclable packaging.

Plastic packaging is easily sealable using polymeric films, largely owing to the compatibility of the polymeric materials used in the packaging and the film. However, sealing non-plastic forms of packaging is an ongoing challenge.

US-A-2012055981 describes a hermetically sealed container that may be produced by an effective and economical process for an in-plant system. The container comprises a coated unitary tray component having a base portion, a side wall portion, and a flange portion; and a lid component hermetically sealed to the flange portion of the tray component. A selected composite polymer film is blow-molded onto an interior surface of the pre-shaped unitary tray structure to provide the coated unitary tray component having its interior surface seamlessly, creaselessly and integrally bonded with the polymeric film.

EP-A-2206658 describes a package having a lower part closed with a cover. The cover is made of plastic, paper, carton and fiber layers. The lower part, a plastic layer of an upper part and the plastic layer of the cover are made of polymers such as polyethylene, polypropylene, polyethylene terephthalate and polyamide, dispersion plastic, and/or biological degradable and/or renewable materials such as biodegradable polymers, paper, pressed fiber, molded pulp and molded fiber-materials. The lower part is provided with a plastic coating. A water-based adhesive is formed as an adhesive layer. A container according to the preamble of claims 1, 12 and 13 is disclosed by document IT MI 20101463.

### BRIEF DESCRIPTION OF THE DRAWINGS

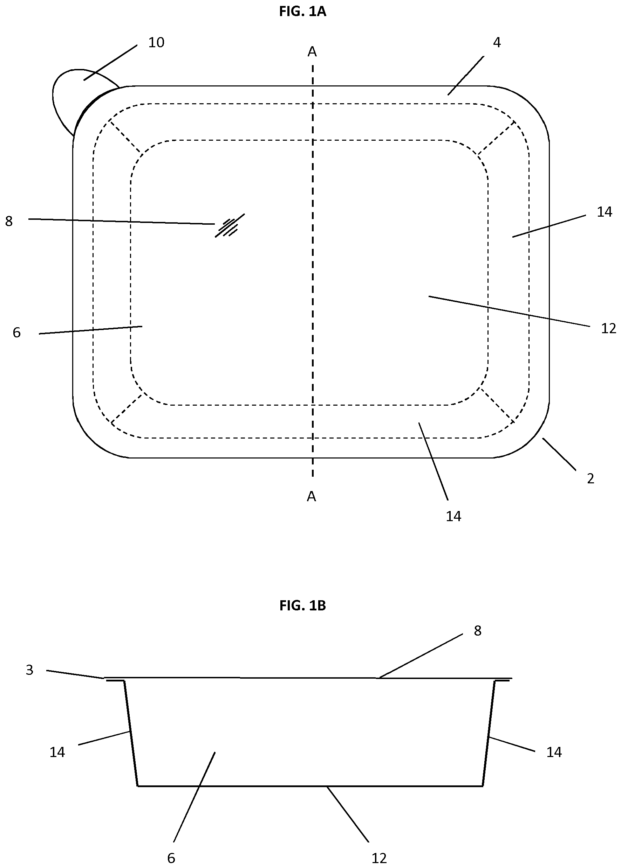

Fig. 1A is a depiction of an exemplary sealed container in plan view.
Fig. 1B is a sectional view of the container of Fig. 1A through A----A.

### SUMMARY OF THE INVENTION

According to a first aspect, there is provided a container having an opening sealed with a polymeric film according to claim 1.

According to a second aspect, there is provided a method of making a sealed container according to claim 12.

According to a third aspect, there is provided a method of packaging an article of commerce in a container according to claim 13.

### DETAILED DESCRIPTION OF THE INVENTION

In the following discussion, reference is made to the illustrated embodiments depicted in Fig. 1A and 1B. References to the figures are made to illustrate the invention and are not intended to limit the embodiments described below to embodiments having precisely the features depicted in the figures.

The container has an opening which is sealed with the polymeric film, i.e., the polymer film bridges across the opening. The container typically comprises a base and side walls about the base. The side walls extend generally upwards from the base forming an interior housing within the container. In plan view, the periphery of the container may be rectangular, oblong, square, circular, ovular, or a squircle. Corners (e.g., between the base and sidewalls, or between adjacent sidewall sections), if present, may be angular or curved. The side wall generally extends vertically from the base. In certain embodiments, an angle between the side wall and the base is at least 90°, for example, from about 90° to about 120°, or from about 90° to about 110°, or from about 90° to about 100°.

In certain embodiments, the polymer film has a thickness of from 5 µm to 50 µm.

In certain embodiments, the polymer film has a thickness of at least about 20 µm, or at least about 30 µm.

Following application, less than about 50 % of the surface area of the polymeric film is in contact with the container. In certain embodiments, less than about 25 % of the surface area of the polymeric film is in contact with the container, for example, less than about 20 %, or less than about 15 %, or less than about 10 %, or less than about 5 %, or less than about 2.5 % or, less than about 1 % of the surface area of the polymeric film is in contact with the container. In certain embodiments, at least about 0.1 % of the surface are of the polymeric film is contact with the container, for example, at least about 0.5 % of the surface area of the polymeric film is in contact with the container.

The container has a rim about the opening, and the seal is formed between the polymeric film and the rim. With reference to Figures 1A and 1B, the rim comprises a flange (4) extending outwards from, and about, the perimeter of the opening (6) of the container (2), and the seal (3) is formed between the polymeric film (8) and the flange (4). The flange (4) extends outwards, for example, in a plane generally parallel to the base (12) of the container (2). The flange (4) may extend outwards up to about 20 mm from the rim, for example, from about 1 mm to about 15 mm, or from about 2 mm to about 12 mm, or from about 2 mm to about 10 mm, or from about 2 mm to about 8 mm, or from about 2 mm to about 6 mm from the rim. In certain embodiments, flange (4) extends outwards up to about 1 mm, or about 2 mm, or about 3 mm, or about 4 mm, or about 5 mm, or about 6 mm, or about 7 mm, or about 8 mm, or about 9 mm, or about 10 mm from the rim. As shown in Figure 1A, for example, the flange (4) may be formed about the entirety of the rim of the container (2) at the top of the side wall (14).

The seal formed between the polymeric film and the flange is the only point of contact between the polymeric film and the container.

In certain embodiments, the polymeric film extends beyond the flange, for example, by an amount sufficient for a user to grip and tear or peel back the polymeric film in order to access the contents of the container. In certain embodiments, the polymer film comprises a tab portion (10), shown as in Figure 1A. The tab portion may sized and configured to enable a user to grip the tab and remove, for example, tear or peel back, the polymeric film from the container. The tab portion, when present, may be integral to the polymeric film.

In certain embodiments, the polymer film is formed of or comprises recycled polymer. In certain embodiments, the polymeric film is recyclable. In certain embodiments, the polymeric film is biodegradable. For the avoidance of doubt, the polymer film with which the container is sealed is not an outer wrapper. For the avoidance of doubt, the polymeric film following application is not coated to an interior surface (e.g., interior surface of the base and sidewall) of the container.

In certain embodiments, the polymeric film comprises polymer which softens or melts upon the application of heat and/or pressure, for example, heat and pressure, i.e., as the polymeric film is applied to the container. Without wishing to be bound by theory, it is believed that the polymer softens or melts into and around fibres of the container, forming a bond between the polymeric film and the container. In certain embodiments, at least a portion of the polymer film, e.g., at least a portion which is in contact with the container upon application of the polymeric film to the container, is formed of polymer which melts upon the application of heat and/or pressure, e.g., heat and pressure, as the polymeric film is applied to the container, e.g., to the rim or flange of the container. Any thermoplastic polymeric material may be used provided it is capable of softening, preferably melting, upon application of heat and/or pressure as the polymer film is applied to the container. In certain embodiments the polymeric material has a melting point of from about 50 °C to about 250 °C, for example, from about 50 °C to about 200 °C, or from about 50 °C to about 150 °C, or from about 75 °C to about 175 °C, or from about 100 °C to about 175 °C, or from about 100 °C to about 150 °C. In certain embodiments, said at least a portion of the polymer film is a polyalkylene polymer, for example, a C₂-C₅ polyalkylene polymer, such as polyethylene, or polypropylene, or polybutylene. In certain embodiments, said at least a portion of the polymer film is polyethylene. In certain embodiments, the polymer film comprises or is formed of polyethylene. In certain embodiments, the polymer film comprises or is formed of HDPE (high density polyethylene having a density of from about 0.93-0.97 g/cm³, and a melting point of between about 100 °C and 140 °C), LDPE (low density polyethylene having a density of from about 0.91-0.93 g/cm³ and a melting point between about 80 °C and 120 °C), or LLDPE (linear low density polyethylene having a density of from about 0.91-0.93 g/cm³ and a melting point between about 120 °C to about 160 °C).

In certain embodiments, the polymer film is a layered composite, for example, a polymer film comprising at least two layers of polymeric material. The layered composite may comprise two layers, or three layers, or four layer, or five or more layers. The layers may be formed of the same polymeric material or different polymeric materials. In certain embodiments, the polymer film comprises a layer of polyalkylene polymer, for example, polyethylene (e.g., HPDE, or LDPE, or LLDPE). In certain embodiments the polymer film comprises a layer of polyethylene and a layer of another polymeric material, for example, polyester. In such embodiments, the layer of polyethylene faces the container during and following application (so that at least a portion of this layer may soften or melt upon application of heat and/or pressure), and the other layer faces outwards.

The polymer films is preferably transparent, although it may be opaque or translucent.

In certain embodiments, the polymer film is breathable (i.e., may allow the passage of oxygen and/or moisture vapour through the film). In certain embodiments, the polymer film is perforated, i.e., comprises perforations. Perforations may used to modify, for example, enhance, the breathability of the film and, thus, the local environment within the container. Labelling may be fixed to the polymeric film, by physical means or by printing directly on to the film.

Advantageously, the sealed container may be free of adhesive, i.e., the seal between the polymeric film and the container is achieved without the need for adhesive.

The container, e.g., a tray for fruit and the like, is formed from a pulpable, fibrous material. The fibrous material may be derived from derived from wood, grasses (e.g., sugarcane, bamboo) or rags (e.g., textile waste, cotton, hemp or flax), preferably from wood. In certain embodiments, the fibrous material is a cellulosic material. In certain embodiments, the fibrous material is derived from recycled paper, for example, recycled paper board. In certain embodiments, the recycled paper board is pre-consumer waste. In certain embodiments, the recycled paper board is corrugator trim (which is a pre-consumer waste product). As discussed below, the container may be formed from a pulp comprising the fibrous material, for example, a pulp comprising recycled paper board, such as a pulp comprising corrugator trim. An advantage in using pre-consumer waste such as corrugator trim is that the waste does not require pre-processing to remove contaminants (e.g., ink, greases) normally associated with a post-consumer waste. However, in certain embodiments, the pulp may comprise post-consumer waste which will have been treated as necessary to remove any contaminants that would otherwise adversely affect the quality (e.g., food safety) of the fresh produce that is to be packaged in the tray.

Typically, the container comprises at least about 80 wt. % fibrous material, based on the total weight of the container, for example, at least about 85 wt. % fibrous material, or at least about 90 % fibrous material, or at least about 91 % fibrous material, or at least about 92 wt. % fibrous material, or at least about 93 wt. % fibrous material, or at least about 94 wt. % fibrous material, or at least about 95 wt. % fibrous material, or at least about 96 wt. % fibrous material, or at least about 97 wt. fibrous material, or at least about 98 wt. % fibrous material. The container may comprise from about 90-99.5 wt. % fibrous material, for example, from about 90-99 wt. % fibrous material, or from about 90-98 wt. %, or 90-97 wt. %, or 90-96 wt. %, or 90-95 wt. %, or 90-94 wt. %, or 90-93 wt. % fibrous material.

The container comprises an additive for varying the moisture and/or water resistance of the container. The additive for varying the moisture and/or water resistance of the container is present in an amount (i) sufficient to prevent the container from absorbing moisture and/or water to the extent that the integrity of the container is compromised in use, and (ii) such that the container is able to absorb an amount of moisture and/or water to the extent that the flexibility of the container is increased. The additive is not formed as a coating on fibrous material, but instead is dispersed within and throughout the fibrous material. This may achieved during the manufacturing process in which the additive is mixed with pulp prior to moulding. Generally, the amount of additive for varying the moisture and/or water resistance of the container may range from about 0.1 wt. % to about 20 wt. %, based on the total weight of the tray, for example, from about 0.1 to about 15 wt. %, or from about 0.1 to about 10 wt. %, or from about 0.5 to about 8.0 wt. %, or from about 0.5 to about 6.0 wt. %, for from about 0.5 to about 5.0 wt. %, or from about 1.0 to about 4.5 wt. %, or from about 1.0 to about 4.0 wt. %, or from about 1.0 wt. % to about 3.5 wt. %, or from about 1.0 to about 3.0 wt. %, or from about 1.0 to about 2.5 wt. %, or from about 1.0 to about 2.0 wt. %, or from about 1.5 wt. % to about 4.5 wt. %, or from about 2.0 wt. % to about 4.0 wt. %, or from about 2.0 to about 3.5 wt. %, or from about 2.5 wt. % to about 3.5 wt. %, or from about 2.0 to about 3.0 wt. %.

Requirements (i) and (ii) mean that the container includes an amount of the additive such that the container is able to absorb a certain amount of moisture and/or vapour to increase the flexibility of the container (or conversely decrease the rigidity of the container), but prevented from absorbing too much moisture and/or water such that the container fails in use (e.g., it becomes too bendy or even disintegrates).

In certain embodiments, the level of additive should be selected such that the container does not fail following packaging, transportation, storage and display over a 5.5 day period, or a 6 day period, or a 6.5 day period, or 7 day period. Generally, the longer the period between packaging and sale, the greater the amount of additive that will be required to prevent the container from absorbing too moisture and/or water. A skilled person will be able to determine the appropriate amount of additive by packaging a container, for example, with fresh produce, and then storing the packaged container at ambient conditions over a 5 day period (or a 5.5 day period, etc) and assessing the integrity of the container and the end of the period. Further details of this determination are found in GB-A-2507385. In certain embodiments, the additive for varying the moisture and/or water resistance of the container is wax, for example, natural wax or synthetic wax. In certain embodiments, the wax is a natural wax selected from group consisting of paraffin wax, beeswax, rice bran wax, carnuba wax, candelilla wax, ouricury wax, sugarcane wax, retamo wax, lanolin and jojoba oil, and mixtures thereof. Advantageously, the wax is a paraffin wax. A paraffin wax is understood to refer to mixtures of mainly straight-chain, saturated hydrocarbons produced from petroleum, lignite or shale tar oil. An exemplary paraffin wax is BIM SE 9244, available from BIM (RTM) Kemi Sweden AB.

Like all of the components of the container of the invention, the additive for varying the moisture and/or water resistance of the tray should comply with any regulatory requirements dealing with food packaging. These may vary depending on the territory in which the container is to be used and sold. For example, the additive for varying the moisture and/or water resistance of the tray preferably complies with FDA: 21 CFR 176.170 (2012); FDA: 21 CFR 176.180 (2012); and BfR XXXVI (2012) "Paper and board for food contact".

In certain embodiments, the container comprises at least about 80 wt. % fibrous material and from about 0.1 to about 10 wt. % of the additive for varying the moisture and/or water resistance of the container, based on the total weight of the container, for example, at least about 90 wt. % fibrous material and from about 0.5 to about 5 wt.% of the additive for varying the moisture and/or water resistance of the container, or at least about 95 wt. % fibrous material and from 0.5 to about 5 wt. % of the additive for varying the moisture and/or water resistance of the container.

In certain embodiments, the container is coloured. By coloured is meant that the colour of the container is different to that of the natural colour of the fibrous material from which the container is formed. Thus, in certain embodiments, the container comprises a colourant, for example, a dye or pigment, preferably a dye. The colourant, e.g., dye, may be added during preparation of the pulp from which the tray is to be moulded, as discussed below. The colourant may be selected so to impart and desired colour to the container. In certain embodiments, the colourant is a black colourant, blue colourant or a mixture of black and blue colourant, for example, a black dye, a blue dye or a mixture of black and blue dye. An exemplary black dye is Cartasol Black M-G liquid, available from Clariant (RTM) Products, Switzerland. An exemplary blue dye is Cartasol Blue K5R liquid, available from Clariant (RTM) Products, Switzerland.

The colourant should comply with any regulatory requirements pertaining to the use of colourants in food packaging. These may vary depending on the territory in which the container is to be used and sold. For example, the colourant preferably complies with Regulation (EC) No 1935/2004 of the European Parliament and of the Council of 27 October 2004 on materials and articles intended to come into contact with food. The container may comprise up to about 5 % by weight colourant, based on the total weight of the container, for example, from about 0.1 to about 4.5 wt. % colourant, or from about 0.5 to about 4.0 wt. % colourant, or up to about 3.5 wt. % colourant, or up to about 3.0 wt. % colourant, or up to about 2.5 wt. % colourant, or up to about 2.0 wt. % colourant, or up to about 2.0 wt. % colourant, or up to about 1.5 wt. % colourant, or up to about 1.0 wt. % colourant.

In certain embodiments, the container further comprises a biocide. This may be added to protect fresh produce contained within the container, for example, to prevent or inhibit microbial spoilage, e.g., rotting, of fresh produce, and also to protect the manufacturing equipment for making the container. The biocide may be a synthetic or natural biocide, preferably a synthetic biocide. An exemplary natural biocide is chitosan. The biocide may be an antimicrobial agent, for example, a germicide, antibacterial agent, antifungal agent, antiprotozoal agent, or a antiparasite agent. Antimicrobial agents also include weak acids, organic acids (.e.g., lactic acid, citric acid, acetic acid, and their salts), bacteriocins, enzymes, and fungicides, among others.

In certain embodiments, the biocide is based on a quaternary ammonium compound. Typically, these compounds comprise one or more polar quaternary amine head groups and a hydrophilic tail (e.g., a long alkyl chain). Although there can be many variations in the minutiae of their structures, the length of the alkyl chain is generally between about 8 and 20 carbon atoms, for example, between about 8 and 16 carbon atoms. An exemplary biocide of this type is Solcide SL 106 (Revision Nr: 0 of 15-08-2011), available from Solstar (RTM). It is based on a twin chain quaternary ammonium compound. This biocide may also comprise glutral.

In certain embodiments, the biocide may be based on a glutaraldehyde compound and/or a isothiozolone compound, for example, 5-chloro-2-methyl-2H-isothiazol-3-one and/or 2-methyl-2H-isothiazol-3-one. An exemplary biocide is Solcide P 103 (Revision Nr: 0 of 12-05-2010), available from Solstar (RTM). Another exemplary biocide is Solcide P 112 (Revision Nr: 0 of 22-03-2011), available from Solstar (RTM).

In certain embodiments, the biocide may be based on an amide compound, for example, a propionamide, such as, for example, 2,2-di-bromo-3-nitrilo-propionamide. An exemplary biocide is Solcide P 107 (Revision Nr: 0 of 10-04-2010), available from Solstar (RTM).

The biocide should comply with any regulatory requirements pertaining to the use of biocides in food packaging. These may vary depending on the territory in which the tray is to be used and sold.

In certain embodiments, the container comprises up to about 3 wt. % biocide, for example, up to about 2 wt. % biocide, or up to about 1 wt. % biocide, or up to about 0.9 wt. % biocide, or up to about 0.8 wt. % biocide, or up to about 0.7 wt. % biocide, or up to about 0.6 wt. % biocide, or up to about 0.5 wt. % biocide, or up to about 0.4 wt. % biocide, or up to about 0.3 wt. % biocide, or up to about 0.2 wt. % biocide. Typically, when present, the container will comprise at least about 0.05 wt. % biocide, for example, at least about 0.1 wt. % biocide.

The biocide may be added during preparation of the pulp from which the container is to be moulded, as discussed below.

In certain embodiments, the container consists of fibrous substrate, the additive for varying the moisture and/or water resistance of the container, e.g., wax, and the polymeric film. In such embodiments, the fibrous material may constitute at least about 90 wt.%, or at least about 95 wt. % of the container, with the balance additive for varying the moisture and/or water resistance of the container, e.g., wax, and the polymeric film. Relative to the body of the container, the polymeric film will be understood to have negligible weight.

In certain embodiments, the container comprises:
(i) from about 90-98 wt. % fibrous material;
(ii) from 0.1 to about 5 wt. % additive, e.g., wax;
(iii) up to about 4.0 wt. % colourant, or from about 0 to 4 wt. % colorant; and
(iv) up to about 2.0 wt. % biocide, or from about 0 to 2.0 wt. biocide, for example, up to about 1.0 wt. % biocide.

In certain embodiments, the container is a tray for fresh produce and the like, as described in GB-A-2507385. In certain embodiments, the tray is suitable for packaging individual pieces of fresh produce, particularly fresh produce for the premium quality market. Fresh produce includes fruit, vegetables and fungi, e.g., mushrooms.

In certain embodiments, the tray is suitable for packaging a wide range of fruits, such as, for example, apples and pears, grapes, citrus fruit, berries, melons, stone fruits, tomatoes, and exotic fruits.

Stone fruits include, apricots, avocados, cherries, dates, greengages, nectarines, peaches and plums, particular the soft skinned stoned fruits which are particularly sensitive to bruising and blemishing during packaging, transport and storage.

Citrus fruits include clementines, grapefruit, kumquats, lemons, limequat, minneolas, oranges, pomelo and satsumas.

Berries include strawberries, blueberries, blackberries, cranberries, gooseberries, raspberries, redcurrants, blackcurrants and white currants.

Melons include varieties such as cantelope, charantais, galia, honeydew, rock and water.

Exotic fruits include custard apple, figs, grenadillo, guava, kiwano (horned melon), kiwi, longuns, lychees, mangoes, mangosteen, passion fruit, paw paw, persimmon, physalis, pineapples (baby), pitahaya red, pitahaya yellow, pomegranates, prickly pear, quinces, rambutans, rhubarb, sharon fruit, star fruit, tamerillo and zespri golden.

Mushrooms include varieties such as button, cepes, chanterelles, chestnut brown, cup, enoki, flat, girolle, gold trumpet, mixed wild, morilles, mousseron, oyster, pied de bleu, pied de mouton, pink oyster, Portobello, shitaki, trumpe de la mor and yellow oyster.

In certain embodiments, the tray is suitable for packaging a wide range of vegetables, such as root vegetables, potatoes, onions and shallots, capsicums, broccolis, chillies, beans, mange tout and peas, exotic vegetables and a selection of other general vegetables.

Root vegetables include beetroot, carrots, celeriac, parsnips, swedes and turnips. Onions and shallots include varieties such as button, cipolino, English, grelot, red, Spanish, strings, white skinned and banana.

Broccolis include sprouting broccoli, button sprouts, red, white and savoy cabbage, cauliflower, curly kale, purple broccoli and brussels sprouts.

Other general vegetables include aubergines, chicory, fennel, leeks, marrows, round courgettes and butternut squash.#

In certain embodiments, the container has a structure as described in GB-A-2507385, for example, the embodiments described at page 11, line 16 to page 15, line 2 of GB-A-2507385.

The container is moulded, for example, a one-piece moulded container which may be biodegradable and/or recyclable.

In certain embodiments, the height of the container (i.e., the distance between, and perpendicular to both the base and the plane of the polymeric film) is at least about 20 mm, for example from about 20 to about 200 mm, or from about 25 to about 150 mm, or from about 30 to about 120 mm, or from about 30 to about 100 mm, or from about 30 to about 80 mm, or from about 20 to about 60 mm, or from about 20 to about 50 mm, or from about 25 to about 50 mm, or from about 30 to about 50 mm, or from about 35 to about 50 mm, or from about 25 to about 40 mm, or from about 25 to about 35 mm, or from about 30 to about 40 mm, or from about 35 to about 45 mm. The length and width of the container may vary, independently, between about 50 mm and 500 mm.

In accordance with a second aspect of the invention, a method is provided for making the sealed container of the invention. The method comprises placing a polymeric film over an opening of a container which is formed from a pulpable, fibrous material, and sealing the opening with the polymeric film by the application of heat and/or pressure to the polymer film and/or container, whereby less than about 50 % of the surface area of the polymeric film is in contact with the container following application of the polymeric film. Typically, less than 5 % of the surface area of the polymeric film is in contact with the container following application of the polymeric film.

At least a portion of the polymer film melts upon the application of heat and/or pressure, thereby bonding the polymer film to the fibres of the container.

A seal is formed between the flange and the polymer film by pressing them together between parallel, optionally heated plates, which are brought together about (e.g., from above and/or below) the flange and polymeric film. In certain embodiments, the flange rests upon a bottom plate (which may or not be heated, preferably not heated) and an upper plate is brought against the upper side of the flange. In certain embodiments, the upper plate is heated. The upper or lower plate may additional comprise means for cutting the polymer film if it is provided as a continuous film.

In certain embodiments, heating is at a temperature of from about 50 °C to about 250 °C, for example, of from about 50 °C and 200 °C, or from about 50 °C to about 175 °C, or from about 75 °C to about 175 °C, or from about 100 °C to about 150 °C. As discussed above, the heating is advantageously at a temperature at which at least a portion of the polymeric film (e.g., polyethylene) melts, forming a bond between the polymeric film and fibres of the container.

In certain embodiments, the pressure applied (e.g., by an upper plate brought down against the upper side of the flange which is supported by a lower plate) is up to about 10 bar, for example, from about 2 bar to about 10 bar, or from about 3 bar to about 8 bar, or from about 4 bar to about 8 bar, or from about 5 bar to about 7 bar.

In certain embodiments, heat and pressure are applied from about 0.1 to about 5 seconds, for example, from about 0.2 to about 3.0 seconds, or from about 0.2 to about 2.0 seconds, or from about 0.2 to about 1.5 seconds, or from about 0.3 to about 1.2 seconds, or from about 0.4 to about 1.1 seconds. The duration of application may be referred to as the residence or dwell time of the container in a container-sealing apparatus.

Suitable apparatus for sealing the container with the polymer film include those conventionally used for sealing plastic containers and include, without limitation, apparatus manufactured by Proseal (RTM) and Mondini (RMT).

The method may be a continuous process in which a plurality of containers are sealed sequentially, or it may be a batch process. The apparatus may be configured to enable automated manufacture of a plurality of sealed containers. Alternatively, the apparatus may be portable enabling individual containers to be sealed manually.

According to the third aspect, there is provided a method of packing an article of commerce in a sealed container according to the first aspect, said method comprising placing an article of commerce in a container having an opening and which is formed from a pulpable, fibrous material, as described above, placing a polymeric film over the opening, and sealing the opening with the polymeric film by the application of heat and/or pressure to the polymer film and/or container. The sealing is conducted in accordance with the second aspect of the present invention.

In certain embodiments, the fresh produce, e.g., any of the fresh produced described above..

Advantageously, any of the methods described herein are carried out in the absence of adhesive, i.e., an adhesive is not applied to the container or the polymeric film during manufacture and/or packaging.

In certain embodiments, the container is a one-piece moulded container and is prepared by a process comprising:
i) preparing, providing or obtaining a pulp comprising suitable amounts of fibrous material, and optionally additive for varying the moisture and/or water resistance and optional biocide; and
ii) moulding a one-piece container therefrom.

The fibrous substrate may be pulped in any suitable pulper. Such apparatus is well known to the those skilled in the art.

Advantageously, the pulp is obtained by pulping recycled paper or paper board, e.g., corrugators trim, to obtain a recycled paper pulp and optionally mixing in appropriate amounts of the additive for varying the moisture and/or water resistance of the container, colourant and biocide.

The fibrous material, e.g., recycled paper or paper board, may be added to the pulper pre-shredded. Typically, the solid content of the pulp is up to about 10 wt. %, based on the total weight of the solid. An appropriate an amount of water relative to the amount of fibrous may be added in order to achieve the desired solids content. In certain embodiments, the solids content in the pulper is less than about 8 wt. %, or less than about 6 wt. %, or less than about 5 wt. % or less than about 4 wt. %, or less than about 3 wt. %, or less than about 2 wt. %. In certain embodiments, the solids content in the pulper is about 1-6 wt. %, for example, from about 2-5 wt. %, or from about 3-5 wt. %, or from about 3-4 wt. %, or from about 3.5-4.5 wt. %.

Typically, the additive for varying the moisture and/or water resistance of the container, e.g., wax, and optional colourant and biocide are added during pulping in suitable amounts depending on the desired composition of the container. In certain embodiments, the biocide, when present, may be added in the water feed to the pulper, for example, added in the white water tank fluidly connected to the pulper. Following pulping, the resultant pulp is forwarded to the moulding apparatus. The solids content of the pulp may be reduced (i.e., by making down with additional water) as it passed to the moulding apparatus. In certain embodiments, the solids content of the pulp is less than about 2 wt. % for moulding, for example, between about 1 and 2 wt. %, or from about 1.4 to about 1.8 wt. %, or from about 1.5 to about 1.7 wt. %. The pulp is typically stored in a pulp tank.

In preferred embodiments, the container is vacuum moulded from the pulp. In certain embodiments, a wire mesh mould tailored to the shape of the container is submerged in a vat (or any other suitable means for storing the pulp) comprising the pulp. In these embodiments, the wire mesh mould would be regarded as a "male" tool with a cavity or cavities protruding upwards from a substantially flat base. A vacuum is then applied from within the mould tool. The vacuum pulls the paper on to the mesh surface of the tool and perforations in the body of the tool allow the water to pass through, leaving the pulp behind formed into the desired shape of container. In an alternative embodiment, the pulp is applied to the wire mesh mould by spraying, before the vacuum being applied as described above. The moulded container is then transferred to a drying stage.

Typically, the container is removed from the mould by suction and then set down on a conveyor belt (with the back surface of the tray (which in use would be the base of the tray) facing upwards. In a preferred embodiments, the setting down during transfer includes the use of air, known as transfer air, to blow the tray from the transfer on the conveyor belt. In advantageous embodiments, the air flow is reduced or controlled to cause the tray to settle gently on the conveyor belt so to control the extent of the flange. In this respect, the greater the force with which the tray meets the conveyor belt, the greater the flange portion that forms because the outer rim of the container tends to be pushed out upon contact with the surface of the conveyor belt.

Following transfer and set down the container is dried and then sent for storage or packaging. Drying may be performed by any suitable drying means, for example, a drying oven. In a preferred embodiment, drying is performed using super-heated steam, e.g., using a Merrill Airdyne dryer. This advantageously reduces the drying time, for example, to 15 mins or less per container, for example, 12 mins or less, or about 10 mins.

In certain advantageous embodiments, the container whilst attached to the mould is subjected to a wet press, typically applied to the back surface of the container using a "female" mould complimentary in form to the "male" moulding tool. This has the advantage of compacting the container and also serves to reduce the water content, pre-drying, by up to about 10 wt. %. This means less energy is required in the drying stage because there is less water to dry out from the tray. Further, the wet press tends to smooth out the back surface of the container, which can be aesthetically pleasing to the eye. The container is then ready for application of the polymeric film, as decribed above.

In certain embodiments, the container is manufactured at a first location, and then transported to a second location for packaging, e.g., with fresh produce, followed by application of the polymeric film.

## Claims

1. A container (2) having an opening (6) sealed with a polymeric film (8), wherein the container (2) is formed from a pulpable, fibrous material, and wherein less than about 50 % of the surface area of the polymeric film (8) is in contact with the container (2), the container (2) having a rim about the opening (6), wherein the rim comprises a flange (4) extending outwards from, and about, the perimeter of the opening (6), the seal (3) formed between the polymer film (8) and the flange (4), wherein the seal (3) formed between the polymeric film (8) and the flange (4) is the only point of contact between the polymeric film (8) and the container (2), wherein the polymeric film (8) is bonded to fibres of the container (2), wherein the polymeric film (8) has a thickness of from 5 µm to 50 µm, **characterized in that** the container (2) is moulded from a composition comprising a fibrous pulp and an additive for varying the moisture and/or water resistance of the container (2).

2. A container according to claim 1, wherein the seal (3) is formed by the application of heat and/or pressure as the polymeric film (8) is placed over the opening (6).

3. A container according to any preceding claim, wherein the additive for varying the moisture and/or water resistance of the container (2) is wax, for example, paraffin wax.

4. A container according to any preceding claim, wherein the fibrous pulp is derived from recycled paper.

5. A container according to any preceding claim, wherein the body of the container (2) comprises at least 90 wt. % fibrous material and from 0.1 to 10 w. % wax.

6. A container according to any preceding claim, wherein the polymeric film (8) is recyclable and/or biodegradable.

7. A container according to any preceding claim, wherein the sealed container is free of adhesive.

8. A container according to any preceding claim, wherein the container (2) is approximately rectangular in plan view.

9. A container according to any preceding claim, wherein the polymeric film (8) comprises a tab portion (10) sized and configured to enable a user to remove, for example, tear or peel, the polymer film (8) from the container (2).

10. A container according to any preceding claim, wherein the polymeric film (8) is breathable, for example, comprises perforations.

11. A container according to any preceding claim, further comprising an article of commerce contained therein, optionally wherein the article of commerce is fresh produce, for example, pieces of fruit and the like.

12. A method of making a sealed container according to claim 1, said method comprising placing a polymeric film (8) over an opening (6) of a container (2) which is formed from a pulpable, fibrous material, and sealing the opening (6) with the polymeric film (8) by the application of heat and/or pressure to the polymer film (8) and/or container (2), whereby less than 50 % of the surface area of the polymeric film (8) is contact with the container (2), the container (2) having a rim about the opening (6), wherein the rim comprises a flange (4) extending outwards from, and about, the perimeter of the opening (6), and a seal (3) formed between the polymer film (8) and the flange (4), wherein the seal (3) formed between the polymeric film (8) and the flange (4) is the only point of contact between the polymeric film (8) and the container (2), wherein at least a portion of the polymeric film (8) melts upon the application of said heat and/or pressure, thereby bonding the polymeric film (8) to the fibres of the container (2), wherein the polymeric film (8) has a thickness of from 5 µm to 50 µm, **characterized in that** the container (2) is moulded from a composition comprising a fibrous pulp and an additive for varying the moisture and/or water resistance of the container (2).

13. A method of packaging an article of commerce in a container according to claim 1, said method comprising placing an article of commerce in the container (2) having an opening (6) and which is formed from a pulpable, fibrous material, placing a polymeric film (8) over the opening (6), and sealing the opening (6) with the polymeric film (8) by the application of heat and/or pressure to the polymer film (8) and/or container (2), and wherein at least a portion of the polymeric film (8) melts upon the application of said heat and/or pressure, thereby bonding the polymeric film (8) to the fibres of the container 2).

14. A method according to any one of claims 12-13, wherein an adhesive is not applied to the container (2) or the polymeric film (8) during manufacture and/or packaging, and wherein the seal (3) between the polymeric film (8) and the container (2) is achieved without the need for an adhesive.

15. A method according to any one of claims 12-14, wherein the additive for varying the moisture and/or water resistance of the container (2) is wax.

## Patentansprüche

1. Behälter (2) mit einer Öffnung (6), die mit einem Polymerfilm (8) versiegelt ist, wobei der Behälter (2) aus einem recyclingfähigen, faserigen Material geformt ist, und wobei weniger als etwa 50 % der Oberfläche des Polymerfilms (8) mit dem Behälter (2) in Kontakt steht, wobei der Behälter (2) einen Rand um die Öffnung (6) herum aufweist, wobei der Rand einen Flansch (4) aufweist, der sich vom und um den Umfang der Öffnung (6) herum nach außen erstreckt, wobei die Dichtung (3), die zwischen dem Polymerfilm (8) und dem Flansch (4) gebildet wird, der einzige Berührungspunkt zwischen dem Polymerfilm (8) und dem Behälter (2) ist, wobei der Polymerfilm (8) mit den Fasern des Behälters (2) verbunden ist, wobei der Polymerfilm (8) eine Stärke von 5 µm bis 50 µm aufweist, **dadurch gekennzeichnet, dass** der Behälter (2) aus einer Mischung, bestehend aus einem Faserzellstoff und einem Additiv zur Veränderung der Feuchtigkeits- bzw. Wasserbeständigkeit des Behälters (2) geformt ist.

2. Behälter gemäß Anspruch 1, wobei die Dichtung (3) durch Anwendung von Wärme und/oder Druck gebildet wird, während der Polymerfilm (8) über der Öffnung (6) aufgebracht wird.

3. Behälter gemäß einem vorhergehenden Anspruch, wobei das Additiv zur Veränderung der Feuchtigkeits- bzw. Wasserbeständigkeit des Behälters (2) Wachs, beispielsweise Paraffinwachs, ist.

4. Behälter gemäß einem vorhergehenden Anspruch, wobei der Faserstoff aus Recyclingpapier gewonnen wird.

5. Behälter gemäß einem vorhergehenden Anspruch, wobei der Körper des Behälters (2) mindestens 90 % Fasermaterial (nach Gewicht) und zwischen 0,1 bis 10 % Wachs (nach Gewicht) enthält.

6. Behälter gemäß einem vorhergehenden Anspruch, wobei der Polymerfilm (8) recyclingfähig bzw. biologisch abbaubar ist.

7. Behälter gemäß einem vorhergehenden Anspruch, wobei der versiegelte Behälter frei von Klebstoff ist.

8. Behälter gemäß einem vorhergehenden Anspruch, wobei der Behälter (2) in der Draufsicht annähernd rechteckig ist.

9. Behälter gemäß einem vorhergehenden Anspruch, wobei der Polymerfilm (8) eine Lasche (10) besitzt, die so bemessen und konfiguriert ist, dass sie es einem Benutzer ermöglicht, den Polymerfilm (8) aus dem Behälter (2) zu entfernen, beispielsweise durch Reißen oder Abziehen.

10. Behälter gemäß einem vorhergehenden Anspruch, wobei der Polymerfilm (8) atmungsaktiv ist, beispielsweise Perforationen aufweist.

11. Behälter gemäß einem vorhergehenden Anspruch, der ferner aus einem darin enthaltenen Handelsartikel besteht, wobei der Handelsartikel ggf. Frischware ist, z.B. Fruchtstücke und dergleichen.

12. Verfahren zur Herstellung eines versiegelten Behälters gemäß Anspruch 1, wobei das Verfahren aus dem Aufbringen eines Polymerfilms (8) über einer Öffnung (6) eines Behälters (2) besteht, der aus einem recyclingfähigen, faserigen Material geformt ist, und der das Versiegeln der Öffnung (6) mit dem Polymerfilm (8) durch Anwendung von Wärme bzw. Druck auf den Polymerfilm (8) bzw. den Behälter (2) umfasst, wobei weniger als 50 % der Oberfläche des Polymerfilms (8) mit dem Behälter (2) in Kontakt ist, wobei der Behälter (2) einen Rand um die Öffnung (6) herum aufweist, wobei der Rand einen Flansch (4) aufweist, der sich vom und um den Umfang der Öffnung (6) herum nach außen erstreckt, und eine Dichtung (3), die zwischen dem Polymerfilm (8) und dem Flansch (4) ausgebildet ist, wobei die Dichtung (3), die zwischen dem Polymerfilm (8) und dem Flansch (4) gebildet wird, der einzige Berührungspunkt zwischen dem Polymerfilm (8) und dem Behälter (2) ist, wobei mindestens ein Teil des Polymerfilms (8) bei Anwendung von Wärme bzw. Druck schmilzt, wodurch der Polymerfilm (8) an die Fasern des Behälters (2) gebunden wird, wobei der Polymerfilm (8) eine Dicke von 5 µm bis 50 µm aufweist, **dadurch gekennzeichnet, dass** der Behälter (2) aus einer Mischung, die aus einem Faserstoff und einem Additiv zur Veränderung der Feuchtigkeits- bzw. Wasserbeständigkeit des Behälters (2) besteht, geformt ist.

13. Verfahren zum Verpacken eines Handelsartikels in einem Behälter gemäß Anspruch 1, wobei das Verfahren des Einbringens des Handelsartikels in dem Behälter (2) eine Öffnung (6) umfasst, die aus einem recyclingfähigen, faserigen Material geformt ist, das Einbringen eines Polymerfilms (8) über die Öffnung (6) und das Versiegeln der Öffnung (6) mit dem Polymerfilm (8) durch Anwendung von Wärme bzw. Druck auf den Polymerfilm (8) bzw. den Behälter (2) erfolgt und wobei mindestens ein Teil des Polymerfilms (8) bei der Anwendung von Wärme bzw. Druck schmilzt, wodurch der Polymerfilm (8) an die Fasern des Behälters gebunden wird (2).

14. Verfahren gemäß einem der Ansprüche 12 - 13, wobei ein Klebstoff während der Herstellung bzw. Verpackung nicht auf den Behälter (2) oder den Polymerfilm (8) aufgebracht wird, und wobei die Versiegelung (3) zwischen dem Polymerfilm (8) und dem Behälter (2) ohne die Notwendigkeit eines Klebstoffs erreicht wird.

15. Verfahren gemäß einem der Ansprüche 12 - 14, wobei das Additiv zum Verändern der Feuchtigkeits- bzw. Wasserbeständigkeit des Behälters (2) Wachs ist.

## Revendications

1. Un récipient (2) ayant une ouverture (6) scellée avec un film polymère (8), dans lequel le récipient (2) est formé à partir d'un matériau fibreux pulpable, et dans lequel moins de 50 % environ de la surface du film polymère (8) est en contact avec le récipient (2), le récipient (2) ayant une jante autour de l'ouverture (6), la jante comprenant une bride (4) s'étendant vers l'extérieur à partir du périmètre du l'ouverture (6), le joint (3) formé entre le film polymère (8) et la bride (4), dans lequel le joint (3) formé entre le film polymère (8) et la bride (4) est le seul point de contact entre le film polymère (8) et le récipient (2), dans lequel le film polymère (8) est lié aux fibres du récipient (2), dans lequel le film polymère (8) a une épaisseur de 5 µm à 50 µm **caractérisé en ce que** le récipient (2) est moulé à partir d'une composition comprenant une pâte fibreuse et un additif pour faire varier la résistance à l'humidité et/ou à l'eau du récipient (2).

2. Le récipient selon la revendication 1, dans lequel le joint (3) est formé par l'application de chaleur et/ou de pression lorsque le film polymère (8) est placé sur l'ouverture (6).

3. Le récipient selon l'une quelconque des revendications précédentes, dans lequel l'additif pour faire varier la résistance à l'humidité et/ou à l'eau du récipient (2) est de la cire, par exemple de la cire de paraffine.

4. Le récipient selon l'une quelconque des revendications précédentes, dans lequel la pâte fibreuse est dérivée de papier recyclé.

5. Le récipient selon l'une quelconque des revendications précédentes, dans lequel le corps du récipient (2) comprend au moins 90 % en poids de matière fibreuse et de 0,1 à 10 % en poids de cire.

6. Le récipient selon l'une quelconque des revendications précédentes, dans lequel le film polymère (8) est recyclable et/ou biodégradable.

7. Le récipient selon l'une quelconque des revendications précédentes, dans lequel le récipient scellé est exempt d'adhésif.

8. Le récipient selon l'une quelconque des revendications précédentes, dans lequel le récipient (2) est approximativement rectangulaire en vue de dessus.

9. Le récipient selon l'une quelconque des revendications précédentes, dans lequel le film polymère (8) comprend une partie de languette (10) dimensionnée et configurée pour permettre à un utilisateur d'enlever, par exemple déchirer ou peler, le film polymère (8) du récipient (2).

10. Le récipient selon l'une quelconque des revendications précédentes, dans lequel le film polymère (8) est perméable à l'air, par exemple, comprend des perforations.

11. Le récipient selon l'une quelconque des revendications précédentes, comprenant en outre un article de commerce contenu dans celui-ci, facultativement dans lequel l'article de commerce est un produit frais, par exemple, des morceaux de fruits et similaires.

12. Un procédé de fabrication d'un récipient scellé selon la revendication 1, ledit procédé consistant à placer un film polymère (8) sur une ouverture (6) d'un récipient (2) qui est formé à partir d'un matériau fibreux pulpable et à sceller l'ouverture (6) avec le film polymère (8) par application de chaleur et/ou de pression sur le film polymère (8) et/ou le récipient (2), dans lequel moins de 50 % de la surface du film polymère (8) est en contact avec le récipient (2), le récipient (2) ayant une jante autour de l'ouverture (6), la jante comprenant une bride (4) s'étendant vers l'extérieur depuis et autour du périmètre de l'ouverture (6), et un joint (3) formé entre le film de polymère (8) et la bride (4), dans lequel le joint (3) formé entre le film polymère (8) et la bride (4) est le seul point de contact entre le film polymère (8) et le récipient (2), dans lequel au moins une partie du film polymère (8) fond à l'application de ladite chaleur et/ou pression, liant ainsi le film polymère (8) aux fibres du récipient (2), dans lequel le film polymère (8) a une épaisseur de 5 µm à 50 µm, **caractérisé en ce que** le récipient (2) est moulé à partir d'une composition comprenant une pâte fibreuse et un additif pour faire varier la résistance à l'humidité et/ou à l'eau du récipient (2).

13. Le procédé d'emballage d'un article de commerce dans un conteneur selon la revendication 1, ledit procédé consistant à placer un objet de commerce dans le récipient (2) ayant une ouverture (6) et qui est formée à partir d'un matériau fibreux pulpable, placer un film polymère (8) sur l'ouverture (6) et sceller l'ouverture (6) avec le film polymère (8) par application de chaleur et/ou une pression sur le film polymère (8) et/ou le récipient (2), et dans lequel au moins une partie du film polymère (8) fond lors de l'application de ladite chaleur et/ou pression, liant ainsi le film polymère (8) aux fibres du récipient.

14. Le procédé selon l'une quelconque des revendications 12 à 13, dans lequel un adhésif n'est pas appliqué sur le récipient (2) ou le film polymère (8) pendant la fabrication et/ou l'emballage, et dans lequel le joint (3) entre le film polymère (8) et le récipient (2) sont réalisés sans nécessiter d'adhésif.

15. Le procédé selon l'une quelconque des revendications 12 à 14, dans lequel l'additif pour faire varier la résistance à l'humidité et/ou à l'eau du récipient (2) est de la cire.
